# EUROPÄISCHE PATENTSCHRIFT

(11) **EP 2 639 475 B1**
(45) Veröffentlichungstag und Bekanntmachung des Hinweises auf die Patenterteilung: **29.04.2015**
(21) Anmeldenummer: 12001796.7
(22) Anmeldetag: 16.03.2012
(51) Int. Cl.: F16F 7/10, G10K 11/178

(54) **Tilgeranordnung**
Dampening assembly
Amortisseur comprenant un masse d'inertie

(43) Veröffentlichungstag der Anmeldung: 18.09.2013
(73) Patentinhaber: Wölfel Beratende Ingenieure GmbH & Co. KG, 97204 Höchberg (DE)
(72) Erfinder: Engelhardt, Jürgen, 97249 Eisingen (DE); Pankoke, Dr. Steffen, 97837 Erlenbach (DE); Wölfel, Prof. Dr. Horst, 97082 Würzburg (DE)
(74) Vertreter: Knoblauch, Andreas

(56) Entgegenhaltungen:
- GB-A- 2 404 716
- US-A- 4 436 188
- US-A- 5 209 326
- US-A- 5 551 650
- LYUBASHEVSKII G S ET AL: "ADAPTIVE CANCELLATION OF THE DISCRETE COMPONENTS OF NOISE AND VIBRATION", SOVIET PHYSICS ACOUSTICS, AMERICAN INSTITUTE OF PHYSICS, NEW YORK, NY, US, Bd. 38, Nr. 3, 1. Mai 1992 (1992-05-01), Seiten 268-271, XP000325067, ISSN: 0038-562X

## Beschreibung

Die vorliegende Erfindung betrifft eine Tilgeranordnung mit einer Befestigungsanordnung und mehreren aktiven Tilgern, von denen jeder eine Reaktionsmassenanordnung und eine Aktoreinrichtung, durch die die Reaktionsmassenanordnung entlang einer Bewegungsachse bewegbar ist, aufweist, wobei die Bewegungsachsen von mindestens zwei Tilgern voneinander abweichen, und wobei die Bewegungsachsen am Massenschwerpunkt der Befestigungsanordnung vorbei gerichtet sind und für jede Richtung der Bewegungsachsen eine Sensoreinrichtung vorgesehen ist.

Eine derartige Tilgeranordnung ist beispielsweise aus US 5 209 326 A bekannt. Die dort offenbarte Tilgeranordnung umfasst eine Vielzahl an aktiven linearen Tilgern mit sich unterscheidenden Bewegungsachsen. Die Tilger sind dabei mit einem Bauteil an einer Struktur angebracht, deren Vibrationen gedämpft werden sollen. An der Struktur sind weiterhin Sensoren angeordnet, um die Vibration der Struktur zu messen. Die Tilger sind über eine Kontrolleinrichtung steuerbar und weisen Bewegungsachsen tangential zu einer Achse der Struktur auf.

Die Veröffentlichung "Adaptive Cancellation of the discrete components of noise and vibration", Lyubashevskii et al, Soviet Physics: Acoustics, May-June 1992 befasst sich mit theroretischen und experimentellen Grundlagen der Schwingungsdämpfung. So wird u.a. eine Tilgeranordnung mit einer Vielzahl an aktiven Tilgern sowie einer Vielzahl an Sensoren beschrieben sowie eine Steuereinrichtung zur Berechnung und Übermittlung von Steuersignalen an die Tilger.

In GB 2 404 716 A wird eine aktive Vibrationsisolationsanordnung von zwei Bauteilen offenbart. Die Anordnung umfasst dabei eine Aktoreinrichtung, eine Feder, sowie eine Reaktionsmassenanordnung, die sowohl mit der Feder als auch mit der Aktoreinrichtung verbunden ist. Eine Sensoreinrichtung ist weiterhin mit einer Steuereinrichtung zur Steuerung der Aktoreinrichtung verbunden.

Eine weitere Tilgeranordnung ist beispielsweise aus US 5 551 650 bekannt. Die Tilger dienen dabei zum Dämpfen der Schwingungen von Flugzeugmotoren. An jedem Flugzeugmotor greifen zwei Tilger aus unterschiedlichen Richtungen an, wobei sich die Bewegungsachsen im Massenschwerpunkt des Flugzeugmotors kreuzen. Jedem Flugzeugmotor ist ein Sensor zugeordnet.

Der Erfindung liegt die Aufgabe zugrunde, eine Tilgeranordnung möglichst vielseitig verwendbar zu machen. Diese Aufgabe wird bei einer Tilgeranordnung der eingangs genannten Art dadurch gelöst, dass jeweils ein aktiver Tilger in einem Tilgermodul zusammengefasst ist, das die Aktoreinrichtung, die Reaktionsmassenanordnung und die Sensoreinrichtung aufweist, wobei jedes Tilgermodul in einem Gehäuse aufgenommen ist, wobei jeder Tilger eine Sensoreinrichtung umfasst, und wobei die Reaktionsmassenanordnung in einer Führung bewegbar gelagert ist, und wobei die Führung und die Bewegungsrichtung eines bewegten Elements der Aktoreinrichtung eine Bewegungsachse bestimmen, entlang der die Reaktionsmassenanordnung bewegt werden kann.

Mit dieser Ausgestaltung können die Reaktionsmassenanordnungen der Tilger nicht nur Kräfte erzeugen, sondern auch Momente. Wenn die Reaktionsmassenanordnungen Kräfte erzeugen sollen, müssen sie gleichartig bewegt werden. Wenn sie Momente erzeugen sollen, werden sie unterschiedlich bewegt, wobei die Bewegungen der Reaktionsmassenanordnungen aufeinander abgestimmt sind. Durch eine geeignet abgestimmte Bewegung der Reaktionsmassenanordnungen können auch gleichzeitig Kräfte und Momente in einem weitgehend frei wählbaren Verhältnis zueinander erzeugt werden. Da jeder Tilger eine Sensoreinrichtung aufweist, ergeben sich Vorteile im Hinblick auf die Redundanz der Tilgeranordnung. Dadurch, dass mindestens zwei Sensoren vorhanden sind, steht immer eine Information über auftretende Schwingungen zur Verfügung, solange mindestens eine Sensoreinrichtung arbeitet. Man kann beispielsweise eine Fehlermeldung oder einen Alarm ausgeben, wenn eine Sensoreinrichtung ausfällt. Die Wahrscheinlichkeit, dass soreinrichtung ausfällt. Die Wahrscheinlichkeit, dass mehr als eine Sensoreinrichtung gleichzeitig ausfällt, ist relativ gering. Außerdem ist jeweils ein aktiver Tilger in einem Tilgermodul zusammengefasst, das die Aktoreinrichtung, die Reaktionsmassenanordnung und die Sensoreinrichtung aufweist, wobei jedes Tilgermodul in einem Gehäuse aufgenommen ist. Man kann dann die Tilgeranordnung sozusagen modulartig ausbilden. Für jede gewünschte Bewegungsachse wird dann ein Modul verwendet. Dies macht es relativ einfach, eine Tilgeranordnung an praktisch beliebige Anwendungszwecke anzupassen. Ferner ergeben sich auf diese Weise Kostenvorteile bei der Herstellung der Tilgermodule.

Vorzugsweise sind die Bewegungsachsen senkrecht zu einer Geraden gerichtet, die durch den Massenschwerpunkt verläuft. Mit anderen Worten sind die Bewegungsachsen tangential zu der Befestigungsanordnung gerichtet. Dies ergibt die beste Wirkung des Kraftangriffs, wenn die Erzeugung eines Moments gewünscht ist.

Vorzugsweise sind die Sensoreinrichtungen aller Tilger mit einer gemeinsamen Steuereinrichtung verbunden, die Ansteuersignale für die Aktoreinrichtungen aller Tilger erzeugt. Die Steuereinrichtung ist also in der Lage, die Aktoreinrichtungen der Tilger in einer aufeinander abgestimmten Weise zu betätigen oder anzusteuern. Damit lässt sich ein verbessertes Tilgungsverhalten erreichen.

Dies gilt insbesondere dann, wenn die Steuereinrichtung zur Ansteuerung einer Aktoreinrichtung ein Signal des dieser Aktoreinrichtung zugeordneten Sensors und ein Signal mindestens eines einer anderen Aktoreinrichtung zugeordneten Sensors verwendet. In diesem Fall arbeitet die Aktoreinrichtung nicht nur in Reaktion auf eine einzige Sensoreinrichtung, sondern in Reaktion auf mindestens zwei Sensoreinrichtungen. Wenn man die Verknüpfungen zwischen den Sensoreinrichtungen und den Aktoreinrichtungen in einer Matrix darstellt, dann ist bei dieser Matrix nicht nur die Hauptdiagonale besetzt, wie dies der Fall wäre, wenn jeder Aktoreinrichtung nur seine eigene Sensoreinrichtung zugeordnet wäre, sondern man findet Verknüpfungen auch außerhalb der Hauptdiagonalen. Damit lässt sich die Tilgungswirkung in mehreren Dimensionen gleichzeitig überwachen und steuern. Man erhält also einen mehrdimensionalen aktiven Tilger.

Bevorzugterweise weist die Steuereinrichtung eine Sicherheitseinrichtung auf, die bei einer kritischen Schwingung die Ansteuerung mindestens einer Aktoreinrichtung verändert. Ein aktiver Tilger arbeitet sozusagen als Regelkreis. Hierbei reagiert die Aktoreinrichtung auf Schwingungen, die von der Sensoreinrichtung ermittelt werden. Ein derartiger Regelkreis kann unter ungünstigen Umständen instabil werden. In diesem Fall schwingt er auf, d.h. die Schwingungen, die an und für sich getilgt werden sollen, werden verstärkt. Man kann dieses Risiko durch die Sicherheitseinrichtung verringern. Die Sicherheitseinrichtung verändert bei einer kritischen Schwingung die Ansteuerung mindestens einer Aktoreinrichtung. Im einfachsten Fall wird diese Aktoreinrichtung abgeschaltet.

Hierbei ist bevorzugt, dass die Sicherheitseinrichtung einen Schwingungsverlauf überwacht. Durch das Überwachen des Schwingungsverlaufs kann man feststellen, ob sich ein Aufschwingen ergeben hat oder ob sich die kritische Schwingung aufgrund von äußeren Einflüssen ausgebildet hat, so dass davon auszugehen ist, dass nach dem Verschwinden der äußeren Einflüsse auch die Schwingungsamplitude wieder zurückgeht. Durch das Überwachen des Schwingungsverlaufs ergibt sich also eine zusätzliche Sicherheitsmaßnahme.

Hierbei ist bevorzugt, dass die Sicherheitseinrichtung zum Ermitteln der kritischen Schwingung das Ansteuersignal mindestens einer Aktoreinrichtung überwacht. Man benötigt also zum Ermitteln der kritischen Schwingung keinen zusätzlichen Sensor. Die kritische Schwingung wird vielmehr durch das Ansteuersignal ermittelt, beispielsweise über dessen Amplitude.

In einer bevorzugten Ausgestaltung ist vorgesehen, dass die Steuereinrichtung eine Speichereinrichtung aufweist, in der Sensoreinrichtungssignale und/oder Aktoreinrichtungs-Ansteuersignale oder davon abgeleitete Größen an einem vorbestimmten Zeitpunkt oder über einen vorbestimmten Zeitraum speicherbar sind. Damit ist es möglich, Schädigungen der Struktur der Befestigungsanordnung frühzeitig zu erkennen. Wenn sich das Schwingungsverhalten der Befestigungsanordnung verändert, ist dies ein Zeichen dafür, dass sich die Befestigungsanordnung mechanisch verändert hat. So kann beispielsweise eine bestimmte Stelle geschwächt worden sein, was sich in einem veränderten Schwingungsverhalten äußert. Wenn man daher die Schwingungen überwacht, kann man frühzeitig auf eine Veränderung der Befestigungsanordnung schließen und damit Schäden frühzeitig erkennen. Für den Vergleich der aktuellen Schwingungssituation mit einer früheren Schwingungssituation gibt es mehrere Möglichkeiten. Man kann beispielsweise das Schwingungsverhalten in einem "gesunden" oder Anfangs-Zustand speichern und das aktuelle Schwingungsverhalten fortlaufend mit diesem Zustand vergleichen. Wenn sich dann Abweichungen ergeben, die über ein vorbestimmtes Maß hinausgehen, kann die Steuereinrichtung einen Warnhinweis ausgeben. Man kann auch den Verlauf des Schwingungsverhaltens überwachen und einen Warnhinweis ausgeben, wenn sich der Verlauf über ein vorbestimmtes Maß hinaus verändert. Bevorzugterweise werden sowohl die Antriebssignale für die Aktoreinrichtungen als auch die Signale der Sensoreinrichtungen hierfür ausgewertet. In vielen Fällen wird aber eines der beiden Signale ausreichen.

Auch ist bevorzugt, wenn die Steuereinrichtung in einen Überprüfungsmodus umschaltbar ist, in dem mit Hilfe der Tilger Kräfte in die Befestigungsanordnung einleitbar sind und Schwingungsantworten der Befestigungsanordnung ermittelbar sind. In diesem Fall kann man sozusagen eine experimentelle Modalanalyse vornehmen. Man leitet eine Schwingung in die Befestigungsanordnung ein und ermittelt die Schwingungsantwort. Die Schwingung kann man beispielsweise in Form eines Impulses in die Befestigungsanordnung einleiten. Es ist aber auch möglich, dass man den Aktor so ansteuert, dass er ein gewisses Frequenzspektrum durchläuft. Auch mit einem derartigen Testmodus kann man entstehende Schäden an der Befestigungsanordnung relativ frühzeitig erkennen.

Hierbei ist besonders bevorzugt, dass mehrere Module parallel zueinander anordenbar sind. In diesem Fall kann man die Tilgeranordnung sozusagen skalieren. Wenn größere Kräfte erforderlich sind, werden einfach mehrere Module parallel zueinander angeordnet.

Vorzugsweise sind Tilger, die auf unterschiedlichen Seiten des Massenschwerpunkts angeordnet sind, mit unterschiedlichen Phasenlagen ansteuerbar. Wenn man die Phasenlage in Relation zu den räumlichen Winkeln zwischen den Bewegungsachsen setzt, kann man auf diese Weise einfach ein Moment um den Massenschwerpunkt herum erzeugen. Wenn man beispielsweise die Tilger auf gegenüberliegenden Seiten des Massenschwerpunkts anordnet, kann man sie gegenphasig, also mit einem Phasenunterschied von 180°, ansteuern, um ein Moment zu erzeugen. Wählt man die Amplituden der einzelnen Tilger dabei unterschiedlich groß, so kann man eine resultierende Kraft und ein resultierendes Moment gleichzeitig erzeugen.

Vorzugsweise ist die Befestigungsanordnung als Rohrleitung ausgebildet. Die Tilgeranordnung ist in besonderem Maße zur Tilgung von Schwingungen geeignet, die in Rohrleitungen auftreten. Durch die "tangentiale" Ausrichtung der Bewegungsachsen benötigt man hier keinen übermäßig großen Bauraum.

Vorzugsweise sind mindestens zwei Bewegungsachsen parallel zueinander gerichtet. Mit einer derartigen Tilgeranordnung kann man dann sowohl Kräfte als auch Momente erzeugen.

Die Erfindung wird im Folgenden anhand von bevorzugten Ausführungsbeispielen in Verbindung mit der Zeichnung beschrieben. Hierin zeigen:
- Fig. 1: ein Tilgermodul und einige Bestandteile davon,
- Fig. 2: verschiedene Möglichkeiten, Tilgermodule an einer Befestigungsanordnung anzuordnen,
- Fig. 3: mehrere Tilgermodule an einer Befestigungsanordnung und
- Fig. 4: eine Schnittstelle zwischen einer Tilgeranordnung und einer Befestigungsanordnung.

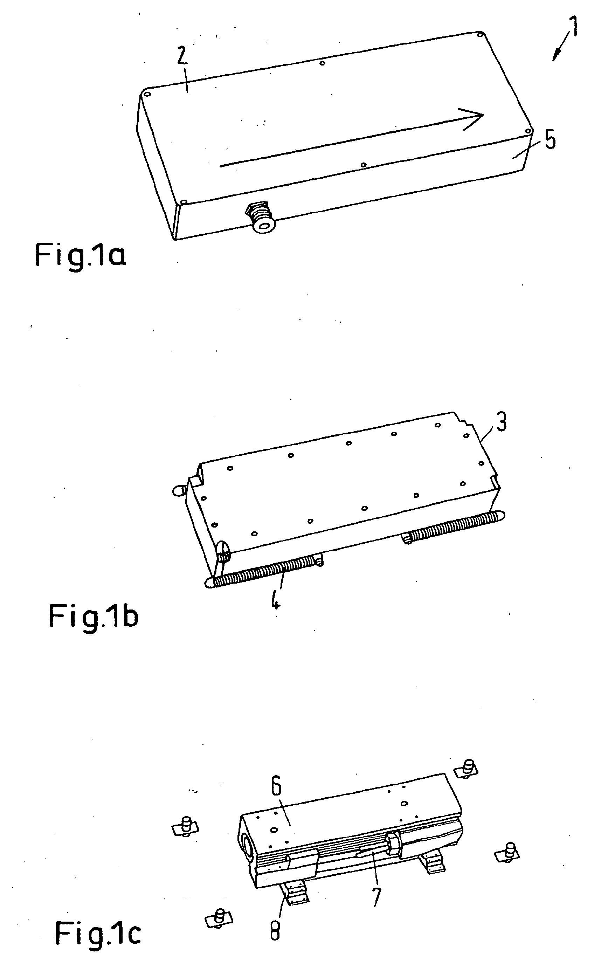

Fig. 1 zeigt schematisch einen aktiven Tilger 1 mit einigen wesentlichen Bestandteilen.

Der Tilger 1 ist als Modul 2 ausgebildet. Jedes Modul 2 weist eine Reaktionsmassenanordnung 3 auf, die als einzelne Reaktionsmasse ausgebildet sein kann oder aus mehreren Teilmassen zusammengesetzt sein kann. Die Reaktionsmassenanordnung 3 ist über Federn 4 mit einem Gehäuse 5 des Moduls 2 verbunden. Ein Aktor 6 ist ebenfalls im Gehäuse 5 fixiert. Der Aktor 6 weist ein bewegtes Element 7 auf, das mit der Reaktionsmassenanordnung 3 verbunden ist. Die Reaktionsmassenanordnung 3 ist in einer Führung 8 bewegbar gelagert. Die Führung 8 und die Bewegungsrichtung des bewegten Elements 7 des Aktors 6 bestimmen eine Bewegungsachse, entlang der die Reaktionsmassenanordnung 3 bewegt werden kann.

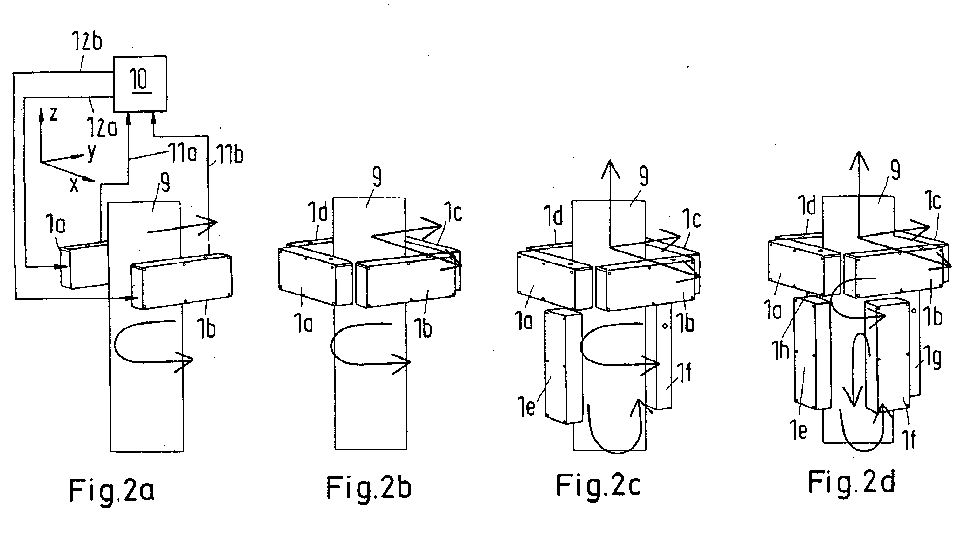

Bei der Bewegung der Reaktionsmassenanordnung 3 handelt es sich um eine geradlinige Bewegung, die üblicherweise als Schwingungsbewegung ausgebildet ist. Zur Bewegung der Reaktionsmassenanordnung 3 muss eine Kraft in die Reaktionsmassenanordnung 3 eingeleitet werden, die als Gegenkraft auf das Gehäuse 5 des Moduls 2 wirkt. Diese Gegenkraft kann man verwenden, um Schwingungen, die auf das Gehäuse 5 des Moduls 2 einwirken, zu tilgen. Hierzu ist das Modul 2 an einer in Fig. 1 nicht näher dargestellten Befestigungsanordnung angeordnet. Die Befestigungsanordnung kann, wie dies beispielsweise in Fig. 2 dargestellt ist, als Rohr 9 ausgebildet sein. Der Tilger 1 ist für die Verwendung an einem Rohr 9 oder einem entsprechenden Rohrabschnitt besonders gut geeignet. Der Tilger 1 kann jedoch auch Schwingungen von anderen Bauelementen dämpfen. Das Teil, an dem der Tilger 1 befestigt ist, wird der Einfachheit halber als "Befestigungsanordnung" bezeichnet.

Die Befestigungsanordnung weist einen Massenschwerpunkt auf. Bei einer Befestigungsanordnung, die in mindestens einer Richtung eine gewisse Länge aufweist, kann man den Massenschwerpunkt auch als Schwerpunktlinie ansehen, beispielsweise bei einer Rohrleitung. Wenn die Rohrleitung zylinderförmig ausgebildet ist, dann fällt die Schwerpunktlinie mit der Mittelachse der Rohrleitung zusammen.

Der Tilger 1 weist auch noch eine Sensoreinrichtung 19 auf, mit deren Hilfe man Schwingungen ermitteln kann. Eine derartige Sensoreinrichtung 19 kann beispielsweise einen Beschleunigungssensor oder dergleichen aufweisen.

Fig. 2 zeigt nun verschiedene Möglichkeiten, wie man eine Tilgeranordnung mit mehreren Tilgern an einem Rohr 9 anordnen kann. Zu Zwecken der Erläuterung sind drei Raumkoordinaten x, y, z in der linken oberen Ecke der Fig. 2 dargestellt. Das Rohr 9 verläuft dabei mit seiner Mittelachse in z-Richtung.

Wenn man, wie in Fig. 2a dargestellt, zwei Tilger 1a, 1b verwendet, kann man eine Kraft in y-Richtung erzeugen, wenn man die Reaktionsmassenanordnungen 3 der Tilger 1a, 1b gleichphasig antreibt. Man kann ein Moment um die z-Achse erzeugen, wenn man die Reaktionsmassenanordnungen 3 der Tilger 1a, 1b gegenphasig antreibt, also mit einer Phasenverschiebung von 180°, aber gleicher Frequenz.

Eine nur schematisch dargestellte Steuereinrichtung 10 ist vorgesehen, die mit beiden Tilgern 1a, 1b verbunden ist. Die Steuereinrichtung 10 empfängt über Leitungen 11a, 11b Signale der Sensoreinrichtungen der Tilger 1a, 1b und gibt über Leitungen 12a, 12b Ansteuersignale für die Aktoreinrichtungen 6 der Tilger 1a, 1b aus. Hierbei berücksichtigt die Steuereinrichtung 10 bei der Ansteuerung des Tilgers 1a nicht nur die Signale der Sensoreinrichtung dieses Tilgers 1a, sondern auch die Signale des anderen Tilgers 1b. Bei der Ansteuerung des Tilgers 1b, genauer gesagt dessen Aktoreinrichtung 6, berücksichtigt die Steuereinrichtung 10 nicht nur die Signale der Sensoreinrichtung dieses Tilgers 1b, sondern auch die Signale der Sensoreinrichtung des anderen Tilgers 1a.

Wenn man die Beziehung zwischen den Signalen der Sensoreinrichtungen und der Ansteuersignale der Aktoreinrichtungen in einer Matrix darstellt, dann ist jedes Element dieser Matrix gefüllt. Würde die Steuereinrichtung jeweils nur die Signale der Sensoreinrichtung eines einzelnen Tilgers zur Ansteuerung dessen Aktoreinrichtung verwenden, dann wäre hier nur die Hauptdiagonale besetzt.

Da im vorliegenden Fall zwei Sensoreinrichtungen vorhanden sind, ergibt sich eine verbesserte Redundanz. Auch bei Ausfall einer Sensoreinrichtung kann die Steuereinrichtung 10 immer noch Schwingungen ermitteln und so die Aktoreinrichtungen beider Tilger 1a, 1b entsprechend ansteuern. Hierbei ist es zweckmäßig, bei Ausfall eines Sensors eine Warnung oder einen Alarm auszugeben, so dass der entsprechende Tilger 1a, 1b mit der defekten Sensoreinrichtung schnellstmöglich repariert werden kann.

Die Bewegungsachsen der beiden Tilger 1a, 1b sind so ausgerichtet, dass sie nicht durch den Massenschwerpunkt des Rohrs bzw. durch die Mittelachse des Rohrs 9 verlaufen, sondern sozusagen tangential dazu. Mit anderen Worten sind die Bewegungsachsen der Tilger 1a, 1b senkrecht zu einer Geraden gerichtet, die durch die Mittelachse des Rohres 9, d.h. den Massenschwerpunkt des Rohres 9 gehen. Wie oben erläutert, lässt sich auf diese Weise sowohl eine Kraft in y-Richtung als auch ein Moment um die z-Achse erzeugen. Damit lassen sich sowohl translatorische Schwingungen des Rohres 9 dämpfen oder sogar tilgen als auch Rotationsschwingungen. Auch eine Kombination beider Schwingungsarten kann wirkungsvoll vermindert werden.

In Fig. 2b ist eine Anordnung mit vier Tilgern 1a, 1b, 1c, 1d dargestellt, die an dem Rohr 9 befestigt sind. Auch hier sind alle Bewegungsachsen tangential zum Rohr 9 angeordnet, also jeweils senkrecht zu Geraden, die durch den Massenschwerpunkt oder die Mittelachse des Rohres 9 verlaufen.

Mit diesen vier Tilgern 1a, 1b, 1c, 1d lassen sich Kräfte in x-Richtung und in y-Richtung und ein Moment um die z-Achse erzeugen. Zur Erzeugung der Kräfte müssen die parallel angeordneten Tilger 1a, 1c; 1b, 1d jeweils gleichphasig angeregt werden. Zur Erzeugung des Moments müssen die parallel angeordneten Tilger 1a, 1c gegenphasig, d.h. mit einem Phasenunterschied von 180° angeregt werden. Gleiches gilt für die beiden anderen Tilger 1b, 1d.

Eine Steuereinrichtung 10, wie sie in Fig. 2a dargestellt ist, kann ebenfalls vorgesehen sein. Natürlich muss diese Steuereinrichtung 10 dann über vier Leitungen mit den Sensoreinrichtungen der Tilger 1a-1d verbunden sein und über entsprechende vier Leitungen mit den Aktoreinrichtungen 6 der Tilger 1a-1d.

Fig. 2c zeigt eine Tilgeranordnung mit sechs Tilgern 1a, 1b, 1c, 1d, 1e, 1f, die an dem Rohr 9 befestigt sind. Die Bewegungsachsen aller Tilger 1a-1f gehen nicht durch den Massenschwerpunkt oder die Mittelachse des Rohres 9. Vielmehr verlaufen die Bewegungsachsen der Tilger 1a-1d tangential zum Rohr 9, stehen also senkrecht zu Geraden, die jeweils durch die Mittelachse des Rohres 9 verlaufen. Die Bewegungsachsen der Tilger 1e, 1f sind parallel zu der Mittelachse des Rohres 9 gerichtet.

Mit einer derartigen Tilgeranordnung lassen sich Kräfte in x-Richtung, y-Richtung und z-Richtung erzeugen und Momente um die x-Achse und um die z-Achse.

Eine zugehörige Steuereinrichtung 10, die aus Gründen der Übersicht nicht dargestellt ist, weist dementsprechend sechs Eingänge für die Signale der sechs Sensoreinrichtungen und sechs Ausgänge zur Verbindung mit den Aktoreinrichtungen 6 der Tilger 1a-1f auf.

Fig. 2d zeigt eine Ausgestaltung mit acht Tilgern 1a, 1b, 1c, 1d, 1e, 1f, 1g, 1h. Die Tilger 1a-1d sind genauso angeordnet, wie in den Fig. 2b und 2c. Die Tilger 1e-1h sind so angeordnet, dass ihre Bewegungsachsen parallel zur Mittelachse des Rohres 9 gerichtet sind.

Eine derartige Tilgeranordnung kann Kräfte in x-Richtung, y-Richtung und z-Richtung erzeugen sowie Momente um die x-Achse, die y-Achse und die z-Achse.

Die Steuereinrichtung 10, die Sensoreinrichtungen der jeweiligen Tilger 1 und die Aktoren bilden zusammen einen Regelkreis. Wie bei jedem Regelkreis besteht auch hier die Gefahr einer Instabilität. Wenn ein derartiger Regelkreis instabil wird, kann er sich aufschwingen, d.h. er tilgt die Schwingungen nicht, wie gewünscht, sondern vergrößert die Schwingungen. Die Steuereinrichtung weist aus diesem Grunde eine Sicherheitseinrichtung auf, die eine kritische Schwingung ermitteln kann. Diese kritische Schwingung kann beispielsweise durch die jeweilige Sensoreinrichtung ermittelt werden. Sie kann aber auch dadurch ermittelt werden, dass die Steuereinrichtung 10 das Signal zur jeweils angesteuerten Aktoreinrichtung 6 überwacht. Wenn dieses Signal zu groß wird, dann wird der Tilger entweder abgeschaltet, also nicht weiter erregt, oder seine Anregungsamplitude wird verkleinert.

In manchen Fällen kann es sinnvoll sein, nicht nur die absolute Schwingungsamplitude zu überwachen, sondern auch den Verlauf, den die Schwingungsamplitude nimmt. Anhand eines derartigen Verlaufs kann man das Aufschwingen eines derartigen Schwingkreises verfolgen. Ein derartiges Aufschwingen kann sich durchaus von einer von außen eingebrachten Schwingung unterscheiden, die amplitudenmäßig die gleiche Wirkung hat, aber bei Ausbleiben der äußeren Anregung wieder abklingt.

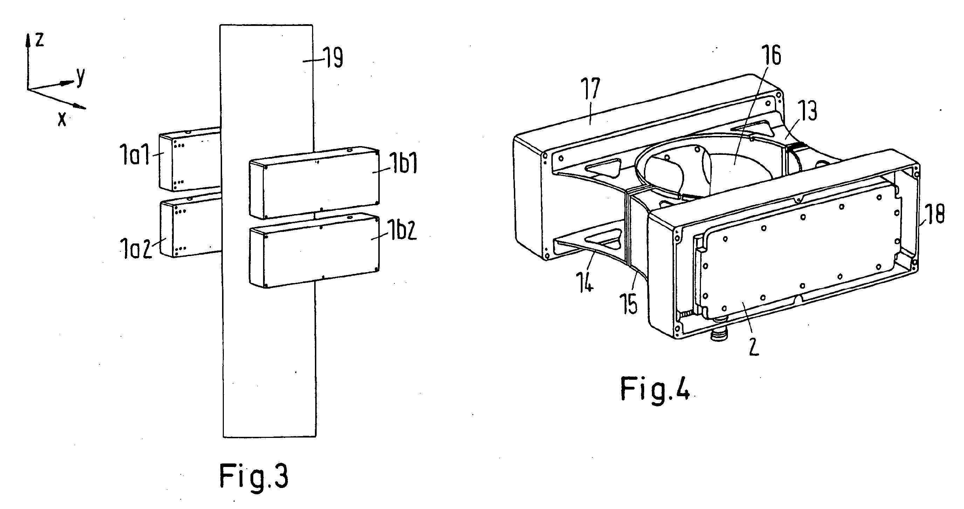

Fig. 3 zeigt eine Möglichkeit, mehrere Tilger 1a1, 1a2 bzw. 1b1, 1b2 parallel anzuordnen. Dies ergibt sich aus dem modulartigen Aufbau der Tilger. Durch das parallele Anordnen kann man die wirksame Kraft der Tilgermodule skalieren. Somit lässt sich auf einfache Weise die Tilgeranordnung an unterschiedliche Anwendungszwecke anpassen. Fig. 3 zeigt eine Ausgestaltung entsprechend der Ausgestaltung nach Fig. 2a. Natürlich kann man auch bei den Ausgestaltungen nach Fig. 2b-2d die entsprechenden Tilger verdoppeln oder einfach vervielfältigen.

Fig. 4 zeigt eine Schnittstelle 13, mit der die beiden Tilger 1a, 1b nach Fig. 2a am Rohr 9 als Befestigungsanordnung befestigt werden können. Hierzu weist die Schnittstelle 13 zwei Teile 14, 15 auf, die zusammen eine Öffnung 16 umschließen, deren Innendurchmesser dem Außendurchmesser des Rohres 9 entspricht. Wenn die beiden Teile 14, 15 miteinander verbunden sind, dann ist die Schnittstelle 13 auf dem Rohr 9 festgespannt und kann Kräfte auf das Rohr 9 übertragen.

Jedes Teil 14, 15 weist ein Gehäuse 17, 18 zur Aufnahme eines Moduls 2 auf. Man kann auch das Gehäuse 5 des jeweiligen Moduls 2 direkt an den Teilen 14, 15 befestigen.

Man kann die Steuereinrichtung auch mit einer Speichereinrichtung versehen, in der beispielsweise Signale der Sensoreinrichtungen und/oder Ansteuersignale der Aktoreinrichtungen oder davon abgeleitete Größen abgespeichert werden können. Dieses Abspeichern kann zu einem vorbestimmten Zeitpunkt erfolgen, beispielsweise in einem "Urzustand" oder zum Zeitpunkt der Inbetriebnahme. Zu diesem Zeitpunkt kann man davon ausgehen, dass die Befestigungsanordnung frei von Schäden ist. In diesem Fall wird sich ein bestimmtes Schwingungsverhalten einstellen, das man entweder über die Sensoreinrichtungen oder über die Aktoreinrichtungen oder über beide erfassen kann. Wenn sich später im Betrieb ein anderes Schwingungsverhalten einstellen sollte, dann ist dies ein Hinweis darauf, dass sich die Befestigungsanordnung möglicherweise verändert hat. Wenn die Veränderung des Schwingungsverhaltens über ein bestimmtes Maß hinausgeht, kann die Steuereinrichtung einen Warnhinweis ausgeben, so dass eine Überprüfung durch ein entsprechend geschultes Personal möglich ist. Wenn beispielsweise die Schwingungsfrequenz absinkt, kann dies ein Zeichen für eine Schwächung der Befestigungsanordnung sein.

Alternativ dazu kann man auch den Verlauf des Schwingungsverhaltens überwachen, also in der Speichereinrichtung die Sensoreinrichtungssignale und/oder die Aktoreinrichtungs-Ansteuersignale oder davon abgeleitete Größen über einen bestimmten Zeitraum speichern. In diesem Fall ist es möglich, ein Warnsignal oder einen Warnhinweis zu erzeugen, wenn sich der Schwingungsverlauf über ein vorbestimmtes Maß hinaus ändert. Eine derartige Lösung ist insbesondere dann günstig, wenn aufgrund äußerer Bedingungen, die nicht auf eine Schädigung der Befestigungsanordnung zurückzuführen sind, ein deutlicher Unterschied zwischen dem Schwingungsverhalten zu einer bestimmten Zeit und dem aktuellen Schwingungsverhalten besteht. Eine derartige Situation kann beispielsweise bei großen Temperaturunterschieden auftreten. In diesem Fall ist es günstiger, den Verlauf des Schwingungsverhaltens zu überwachen.

Man kann die Steuereinrichtung auch für Test- oder Überprüfungszwecke verwenden. In diesem Fall ist die Steuereinrichtung in einen Überprüfungsmodus umschaltbar. Im Überprüfungsmodus werden mit Hilfe der Tilger Kräfte in die Befestigungsanordnung eingeleitet und Schwingungsantworten der Befestigungsanordnung werden ermittelt. Auch hier wird man durch einen Vergleich der Schwingungsantworten in unterschiedlichen Zeitpunkten, beispielsweise zum Zeitpunkt der Inbetriebnahme und zu einem späteren Zeitpunkt, feststellen können, ob sich eine Veränderung ergeben hat. Wenn sich eine Veränderung ergeben hat, die über ein vorbestimmtes Maß hinausgeht, kann die Steuereinrichtung einen Warnhinweis erzeugen.

## Patentansprüche

1. Tilgeranordnung mit einer Befestigungsanordnung (9) und mehreren aktiven Tilgern (1a, 1b; 1a-1d; 1a-1f; 1a-1h), von denen jeder eine Reaktionsmassenanordnung (3) und eine Aktoreinrichtung (6), durch die die Reaktionsmassenanordnung (3) entlang einer Bewegungsachse bewegbar ist, aufweist, wobei die Bewegungsachsen von mindestens zwei Tilgern (1a, 1b; 1a-1d; 1a-1f; 1a-1h) voneinander abweichen, und wobei die Bewegungsachsen am Massenschwerpunkt der Befestigungsanordnung (9) vorbei gerichtet sind und für jede Richtung der Bewegungsachsen (1a, 1b; 1a-1d; 1a-1f; 1a-1h) eine Sensoreinrichtung vorgesehen ist, **dadurch gekennzeichnet, dass** jeweils ein aktiver Tilger in einem Tilgermodul (2) zusammengefasst ist, das die Aktoreinrichtung (6), die Reaktionsmassenanordnung (3) und die Sensoreinrichtung aufweist, und wobei jedes Tilgermodul (2) in einem Gehäuse (5, 17, 18) aufgenommen ist, wobei jeder Tilger (1a, 1b; 1a-1d, 1a-1f; 1a-1h) eine Sensoreinrichtung umfasst, und wobei die Reaktionsmassenanordnung (3) in einer Führung (8) bewegbar gelagert ist, und wobei die Führung (8) und die Bewegungseinrichtung eines bewegten Elements (7) der Aktoreinrichtung (6) eine Bewegungsachse bestimmen, entlang der die Reaktionsmassenanordnung (3) bewegt werden kann.

2. Tilgeranordnung nach Anspruch 1, **dadurch gekennzeichnet, dass** die Bewegungsachsen senkrecht zu einer Geraden gerichtet sind, die durch den Massenschwerpunkt verläuft.

3. Tilgeranordnung nach Anspruch 1 oder 2, **dadurch gekennzeichnet, dass** die Sensoreinrichtung aller Tilger (1a, 1b; 1a-1d; 1a-1f; 1a-1h) mit einer gemeinsamen Steuereinrichtung (10) verbunden ist, die Ansteuersignale für die Aktoreinrichtungen (6) aller Tilger (1a, 1b) erzeugt.

4. Tilgeranordnung nach Anspruch 3, **dadurch gekennzeichnet, dass** die Steuereinrichtung (10) zur Ansteuerung einer Aktoreinrichtung (6) ein Signal der dieser Aktoreinrichtung (6) zugeordneten Sensoreinrichtung und ein Signal mindestens einer einer anderen Aktoreinrichtung zugeordneten Sensoreinrichtung verwendet.

5. Tilgeranordnung nach Anspruch 3 oder 4, **dadurch gekennzeichnet, dass** die Steuereinrichtung (10) eine Sicherheitseinrichtung aufweist, die bei einer kritischen Schwingung die Ansteuerung mindestens einer Aktoreinrichtung (6) verändert.

6. Tilgeranordnung nach Anspruch 5, **dadurch gekennzeichnet, dass** die Sicherheitseinrichtung einen Schwingungsverlauf überwacht.

7. Tilgeranordnung nach Anspruch 5 oder 6, **dadurch gekennzeichnet, dass** die Sicherheitseinrichtung zum Ermitteln der kritischen Schwingung das Ansteuersignal mindestens einer Aktoreinrichtung (6) überwacht.

8. Tilgeranordnung nach einem der Ansprüche 3 bis 7, **dadurch gekennzeichnet, dass** die Steuereinrichtung (10) eine Speichereinrichtung aufweist, in der Sensoreinrichtungssignale und/oder Aktoreinrichtungs-Ansteuersignale oder davon abgeleitete Größen an einem vorbestimmten Zeitpunkt oder über einen vorbestimmten Zeitraum speicherbar sind.

9. Tilgeranordnung nach einem der Ansprüche 3 bis 8, **dadurch gekennzeichnet, dass** die Steuereinrichtung (10) in einen Überprüfungsmodus umschaltbar ist, in dem mit Hilfe der Tilger Kräfte in die Befestigungsanordnung einleitbar sind und Schwingungsantworten der Befestigungsanordnung ermittelbar sind.

10. Tilgeranordnung nach einem der Ansprüche 1 bis 9, **dadurch gekennzeichnet, dass** mehrere Module parallel zueinander anordenbar sind.

11. Tilgeranordnung nach einem der Ansprüche 1 bis 10, **dadurch gekennzeichnet, dass** Tilger, die auf unterschiedlichen Seiten des Massenschwerpunkts angeordnet sind, mit unterschiedlichen Phasenlagen ansteuerbar sind.

12. Tilgeranordnung nach einem der Ansprüche 1 bis 11, **dadurch gekennzeichnet, dass** die Befestigungsanordnung als Rohrleitung (9) ausgebildet ist.

13. Tilgeranordnung nach einem der Ansprüche 1 bis 12, **dadurch gekennzeichnet, dass** mindestens zwei Bewegungsachsen parallel zueinander gerichtet sind.

## Claims

1. Damper arrangement comprising a fixing arrangement (9) and a plurality of active dampers (1a, 1b; 1a-1d; 1a-1f; 1a-1h), each of which comprises a reaction-mass arrangement (3) and an actuator (6), by means of which the reaction-mass arrangement (3) is movable along a movement axis, the movement axes of at least two dampers (1a, 1b; 1 a-1d; 1a-1f; 1a-1h) deviating from one another, and the movement axes being directed past the centre of mass of the fixing arrangement (9), and a sensor device being provided for each direction of the movement axes (1a, 1b; 1a-1d; 1a-1f; 1a-1h), **characterised in that** an active damper is included in each damper module (2), which comprises the actuator (6), the reaction-mass arrangement (3) and the sensor device, and each damper module (2) being accommodated in a housing (5, 7, 18), each damper (1 a, 1b; 1a-1d; 1 a-1f; 1 a-1 h) comprising a sensor device, and the reaction-mass arrangement (3) being movably mounted in a guide (8), and the guide (8) and the movement device of a movable element (7) of the actuator (6) determining a movement axis, along which the reaction-mass arrangement (3) can be moved.

2. Damper arrangement according to claim 1, **characterised in that** the movement axes are oriented perpendicularly to a straight line which extends through the centre of mass.

3. Damper arrangement according to either claim 1 or claim 2, **characterised in that** the sensor device of all the dampers (1a, 1b; 1a-1d; 1a-1f; 1a-1h) is connected to a common control device (10) which generates actuation signals for the actuators (6) of all the dampers (1a, 1b).

4. Damper arrangement according to claim 3, **characterised in that** the control device (10) for actuating an actuator (6) uses a signal from the sensor device associated with said actuator (6) and a signal from at least one sensor device associated with another actuator.

5. Damper arrangement according to either claim 3 or claim 4, **characterised in that** the control device (10) comprises a safety device which modifies the actuation of at least one actuator (6) in the event of critical vibration.

6. Damper arrangement according to claim 5, **characterised in that** the safety device monitors progression of the vibration.

7. Damper arrangement according to either claim 5 or claim 6, **characterised in that** the safety device monitors the actuation signal of at least one actuator (6) in order to detect critical vibration.

8. Damper arrangement according to any of claims 3 to 7, **characterised in that** the control device (10) comprises a memory device in which sensor device signals and/or actuator actuation signals, or values derived therefrom, can be stored at a predetermined time or over a predetermined period of time.

9. Damper arrangement according to any of claims 3 to 8, **characterised in that** the control device (10) can be switched into a checking mode in which, using the damper, forces can be transferred into the fixing arrangement and vibratory responses of said fixing arrangement can be detected.

10. Damper arrangement according to any of claims 1 to 9, **characterised in that** a plurality of modules can be arranged so as to be mutually parallel.

11. Damper arrangement according to any of claims 1 to 10, **characterised in that** dampers, which are arranged on different sides of the mass centre point, can be actuated using different phase positions.

12. Damper arrangement according to any of claims 1 to 11, **characterised in that** the fixing arrangement is formed as tubing (9).

13. Damper arrangement according to any of claims 1 to 12, **characterised in that** at least two movement axes are oriented so as to be mutually parallel.

## Revendications

1. Agencement d'amortissement avec un agencement de fixation (9) et plusieurs amortisseurs actifs (1a, 1b; 1a-1d; 1a-1f; 1a-1h), dont chacun présente un agencement de masse de réaction (3) et un dispositif d'actionnement (6), par lequel l'agencement de masse de réaction (3) peut être déplacé le long d'un axe de déplacement, les axes de déplacement d'au moins deux amortisseurs (1a, 1b; 1a-1d; 1a-1f; 1a-1h) divergeant l'un de l'autre et les axes de déplacement étant dirigés de manière à passer devant le centre de gravité de masse de l'agencement de fixation (9) et pour chaque direction des axes de déplacement (1a, 1b; 1a-1d; 1a-1f; 1a-1h) étant prévu un dispositif de détection, **caractérisé en ce que** respectivement un amortisseur actif est réuni dans un module d'amortissement (2) qui présente le dispositif d'actionnement (6), l'agencement de masse de réaction (3) et le dispositif de détection, et chaque module d'amortissement (2) étant reçu dans un boîtier (5, 17, 18), chaque amortisseur (1a, 1b; 1a-1d; 1a-1g; 1a-1h) comportant un dispositif de détection, et l'agencement de masse de réaction (3) étant logé de manière mobile dans un guidage (8) et le guidage (8) et le dispositif de déplacement d'un élément déplacé (7) du dispositif d'actionnement (6) déterminant un axe de déplacement, le long duquel l'agencement de masse de réaction (3) peut être déplacé.

2. Agencement d'amortissement selon la revendication 1, **caractérisé en ce que** les axes de déplacement sont dirigés perpendiculairement à une droite qui s'étend au travers du centre de gravité de masse.

3. Agencement d'amortissement selon la revendication 1 ou 2, **caractérisé en ce que** le dispositif de détection de tous les amortisseurs (1a, 1b; 1a-1d; 1a-1f; 1a-1h) est relié à un dispositif de commande (10) commun qui génère des signaux de commande pour les dispositifs d'actionnement (6) de tous les amortisseurs (1a, 1b).

4. Agencement d'amortissement selon la revendication 3, **caractérisé en ce que** le dispositif de commande (10) utilise pour la commande d'un dispositif d'actionnement (6) un signal du dispositif de détection associé à ce dispositif d'actionnement (6) et un signal d'au moins un dispositif de détection associé à un autre dispositif d'actionnement.

5. Agencement d'amortissement selon la revendication 3 ou 4, **caractérisé en ce que** le dispositif de commande (10) présente un dispositif de sécurité qui modifie pour une oscillation critique la commande d'au moins un dispositif d'actionnement (6).

6. Agencement d'amortissement selon la revendication 5, **caractérisé en ce que** le dispositif de sécurité surveille un déroulement d'oscillation.

7. Agencement d'amortissement selon la revendication 5 ou 6, **caractérisé en ce que** le dispositif de sécurité surveille pour la détermination de l'oscillation critique le signal de commande d'au moins un dispositif d'actionnement (6).

8. Agencement d'amortissement selon l'une quelconque des revendications 3 à 7, **caractérisé en ce que** le dispositif de commande (10) présente un dispositif de mémorisation, dans lequel des signaux de dispositif de détection etlou des signaux de commande de dispositif d'actionnement ou des grandeurs dérivées - de ceux-ci peuvent être enregistrés à un moment prédéterminé ou pendant une période prédéterminée.

9. Agencement d'amortissement selon l'une quelconque des revendications 3 à 8, **caractérisé en ce que** le dispositif de commande (10) est commutable dans un mode de vérification, dans lequel des forces peuvent être introduites à l'aide des amortisseurs dans l'agencement de fixation et des réponses d'oscillation de l'agencement de fixation peuvent être déterminées.

10. Agencement d'amortissement selon l'une quelconque des revendications 1 à 9, **caractérisé en ce que** plusieurs modules peuvent être agencés parallèlement les uns aux autres.

11. Agencement d'amortissement selon l'une quelconque des revendications 1 à 10, **caractérisé en ce que** des amortisseurs qui sont agencés sur des côtés différents du centre de gravité de masse, peuvent être commandés avec différentes positions de phase.

12. Agencement d'amortissement selon l'une quelconque des revendications 1 à 11, **caractérisé en ce que** l'agencement de fixation est réalisé comme une canalisation (9).

13. Agencement d'amortissement selon l'une quelconque des revendications 1 à 12, **caractérisé en ce qu'**au moins deux axes de déplacement sont dirigés parallèlement l'un à l'autre.
